(19) **Europäisches Patentamt**
**European Patent Office**
**Office européen des brevets**

(11) **EP 3 279 024 A1**

(12) **EUROPÄISCHE PATENTANMELDUNG**

(43) Veröffentlichungstag:
**07.02.2018 Patentblatt 2018/06**

(21) Anmeldenummer: **16182212.7**

(22) Anmeldetag: **01.08.2016**

(51) Int Cl.:
*B60L 3/00* (2006.01)          *B60L 3/04* (2006.01)
*B60L 9/00* (2006.01)          *H02H 3/08* (2006.01)
*H02H 3/05* (2006.01)          *H02H 7/125* (2006.01)
*H02H 7/12* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Bakran, Mark-Matthias**
  **91052 Erlangen (DE)**
• **Laska, Bernd**
  **91074 Herzogenaurach (DE)**
• **Nagel, Andreas**
  **90431 Nürnberg (DE)**

(54) **ANTRIEBSSYSTEM FÜR EIN SCHIENENFAHRZEUG**

(57)     Die Erfindung betrifft ein Antriebssystem (1) für ein Schienenfahrzeug mit einem Transformator (3), einem Hauptschalter (2) und einem Netzanschluss (12), wobei der Hauptschalter (2) zwischen dem Netzanschluss (13) und einer Primärwicklung (31) des Transformators (3) angeordnet ist. Zur Verbesserung des Antriebssystems wird vorgeschlagen dass der Transformator (3) eine Kurzschlussspannung ($u_k$) von maximal 25% aufweist, wobei der Hauptschalter (2) eine erste Reihenschaltung (25) von mindestens zwei Leistungshalbleitern (21,21a,21b) aufweist, wobei mittels eines ersten Leistungshalbleiters (21a) der mindestens zwei Leistungshalbleiter (21) ein Strom ($I_{1,hin}$) durch die erste Reihenschaltung (25) in Richtung vom Netzanschluss (12) zum Transformator (3) abschaltbar ist und mittels eines zweiten Leistungshalbleiters (21b) der mindestens zwei Leistungshalbleiter (21) ein Strom ($I_{1,rück}$) durch die erste Reihenschaltung (25) in Richtung vom Transformator (3) zum Netzanschluss (12) abschaltbar ist. Weiter betrifft die Erfindung ein Schienenfahrzeug mit einem solchen Antriebssystem, wobei der Netzanschluss (12) des Antriebssystems (1) mit einem Stromabnehmer (8) elektrisch verbunden ist, wobei das Schienenfahrzeug für den Betrieb in einem Wechselspannungsnetz vorgesehen ist.

FIG 1

EP 3 279 024 A1

## Beschreibung

Die Erfindung betrifft ein Antriebssystem für ein Schienenfahrzeug mit einem Transformator, einem Hauptschalter und einem Netzanschluss, wobei der Hauptschalter zwischen dem Netzanschluss und einer Primärwicklung des Transformators angeordnet ist. Ferner betrifft die Erfindung ein Schienenfahrzeug mit einem solchen Antriebssystem. Die Erfindung betrifft weiter ein Verfahren zum Betreiben eines solchen Antriebssystems oder eines solchen Schienenfahrzeugs, wobei der Netzanschluss des Antriebssystems mittels eines Stromabnehmers mit einem Fahrdraht oder einer Stromschiene elektrisch verbunden ist. Des Weiteren betrifft die Erfindung die Verwendung eines Hauptschalters in einem Schienenfahrzeug.

Schienenfahrzeuge weisen häufig ein elektrisches Antriebssystem mit einem Transformator, einem Umrichter und Fahrmotoren auf. Der Transformator dient zur Anpassung der Spannungshöhe des Fahrdrahtes oder der Stromschiene an die Spannungen des Antriebssystems. Im Folgenden wird die Stromschiene nicht mehr ausdrücklich erwähnt, jedoch kann diese immer als Alternative zum Fahrdraht verwendet werden. Der Umrichter, auch als Antriebsstromrichter oder Antriebsumrichter bezeichnet, regelt den Strom für die Fahrmotoren, so dass sich das gewünschte Drehmoment ergibt und sich damit die vorgegebene Geschwindigkeit am Schienenfahrzeug einstellt. Der Antriebstromrichter ist dabei häufig als Umrichter mit einem Spannungszwischenkreis ausgeführt. In einer solchen Anordnung kann es aufgrund von diversen Ursachen immer auch zu Fehlern kommen. Diese führen dann in einigen Fällen zum Eintreten eines Kurzschlusses im Zwischenkreis. Da sich der Kurzschluss im Zwischenkreis vom Transformator aus betrachtet auf der Sekundärseite, d.h. auf der der Sekundärwicklung zugewandten Seite des Transformators, befindet, wird dieser als sekundärseitiger Kurzschluss oder auch als Kurzschluss auf der Sekundärseite bezeichnet. In diesem Fall fließt ein Kurzschlussstrom vom Fahrdraht über den Transformator zum Ort des Kurzschlusses. Der Kurzschlussstrom führt sowohl zu einer mechanischen Belastung des Transformators als auch zu einer elektrischen Belastung des Umrichters. Um die Belastung gering zu halten und eine Beschädigung von Komponenten weitestgehend zu vermeiden, wird ein Hauptschalter vorgesehen, der den Kurzschlussstrom abschaltet. Das Öffnen des Hauptschalters, das zum Abschalten des Kurzschlussstromes führt, wird auch als Auslösen des Hauptschalters bezeichnet.

Dabei kommen in Schienenfahrzeugen mechanische Hauptschalter zum Einsatz, die durch eine Bewegung von stromführenden Teilen im Innern des Hauptschalters die elektrische Verbindung zwischen den Anschlüssen des Hauptschalters unterbrechen. Aus dem technischen Gebiet der Hochspannungsgleichstromübertragung (HGÜ, engl. HVDC) sind Leistungsschalter zum Schalten von Gleichstrom auf der Basis von Leistungshalbleitern bekannt. Beispiele für entsprechende Leistungsschalter sind den Veröffentlichungen "A Surgeless Solid-State DC Circuit Breaker for Voltage-Source-Converter-Based HVDC Systems", von Kenichiro Sano und Masahiro Takasaki (IEEE Transactions on Industriy Applications, Vol. 50, No. 4, July/August 2014) sowie "Technical Assessment of Load Commutation Switch in Hybrid HVDC Breaker", von Arman Hassanpoor, Jürgen Häfner und Bjorn Jacobson (The 2014 International Power Electronics Conference, 2014) zu entnehmen. Diese Veröffentlichungen offenbaren Leistungsschalter mit Leistungshalbleitern zum Schalten von Gleichstrom.

Diese HGÜ-Systeme zur Übertragung von Energie mittels Gleichstrom übertragen eine Leistung von mehr als 300MW bei einer Gleichspannung von über 250kV. Aufgrund der hohen Spannungen müssen zur Erreichung einer hinreichenden Sperrfähigkeit eine Vielzahl von Leistungshalbleitern in Reihe angeordnet werden.

Leistungsschalter auf der Basis von Leistungshalbleitern sind bezogen auf die schaltbare Leistung deutlich teurer als mechanische Hauptschalter.

Der Erfindung liegt die Aufgabe zugrunde, das Antriebssystem eines Schienenfahrzeugs zu verbessern.

Diese Aufgabe wird durch ein Antriebssystem für ein Schienenfahrzeug mit einem Transformator, einem Hauptschalter und einem Netzanschluss, wobei der Hauptschalter zwischen dem Netzanschluss und einer Primärwicklung des Transformators angeordnet ist, wobei der Transformator eine Kurzschlussspannung $u_k$ von maximal 25% aufweist, wobei der Hauptschalter eine erste Reihenschaltung von mindestens zwei Leistungshalbleitern aufweist, wobei mittels eines ersten Leistungshalbleiters der mindestens zwei Leistungshalbleiter ein Strom durch die erste Reihenschaltung in Richtung vom Netzanschluss zum Transformator abschaltbar ist und mittels eines zweiten Leistungshalbleiters der mindestens zwei Leistungshalbleiter ein Strom durch die erste Reihenschaltung in Richtung vom Transformator zum Netzanschluss abschaltbar ist. Ferner wird diese Aufgabe durch ein Schienenfahrzeug mit einem solchen Antriebssystem gelöst, wobei der Netzanschluss des Antriebssystems mit einem Stromabnehmer elektrisch verbunden ist, wobei das Schienenfahrzeug für den Betrieb in einem Wechselspannungsnetz vorgesehen ist. Weiter wird diese Aufgabe durch ein Verfahren zum Betreiben eines solchen Antriebssystems oder eines solchen Schienenfahrzeugs gelöst, wobei der Netzanschluss des Antriebssystems, insbesondere mittels eines Stromabnehmers, mit einem Fahrdraht oder einer Stromschiene elektrisch verbunden ist, wobei bei Erkennen eines Kurzschlusses auf der Sekundärseite des Transformators die mindestens zwei Leistungshalbleiter der ersten Reihenschaltung gesperrt werden. Ferner wird die Aufgabe durch die Verwendung eines Hauptschalters zum Abschalten eines Kurzschlussstromes in einem mit Wechselspannung betreibbaren Schienenfahrzeug gelöst, wobei das Schienenfahrzeug einen Stromabnehmer und einen Transformator umfasst, wobei der Hauptschalter eine erste Reihenschaltung von mindestens zwei Leistungshalbleitern aufweist, wobei mittels eines ersten der mindestens zwei Leistungshalbleiter ein Strom durch die erste Reihenschaltung in Richtung vom Stromabnehmer zum Transformator abschaltbar ist und durch einen zweiten der mindestens zwei Leistungshalbleiter ein Strom durch die erste Reihenschaltung in Richtung vom Transformator zum Stromabnehmer abschaltbar ist.

Vorteilhafte Ausgestaltungen der Erfindung sind in den abhängigen Ansprüchen angegeben.

Der Erfindung liegt die Erkenntnis zugrunde, dass sich die Dimensionierung von Komponenten des Antriebssystems dadurch verbessern lässt, dass anstelle eines rein mechanischen Hauptschalters ein Hauptschalter mit Leistungshalbleitern verwendet wird. Zum Unterbrechen des Stromflusses durch den Leistungshalbleiter werden die Leistungshalbleiter gesperrt. Es hat sich dabei als vorteilhaft erwiesen, wenn die Sperrfähigkeit der Leistungshalbleiter des Hauptschalters um den Faktor 1,5 bis 2 größer ist als der Spitzenwert der Netzspannung. Man bezeichnet als Auslösen des Hauptschalters den Vorgang, dass der Hauptschalter den durch ihn fließenden Strom unterbricht. Dieser neuartige Schalter ist durch die Verwendung von Leistungshalbleitern in der Lage, den Strom zu unterbrechen, bevor er auf zu hohe Werte bzw. unzulässig hohe Werte gestiegen ist. Das heißt, es muss nicht der Stromnulldurchgang abgewartet werden, bei dem ein mechanischer Schalter seine Sperrwirkung erzielt. Bei dem Einsatz eines solchen Hauptschalters in einem Antriebssystem eines Schienenfahrzeugs kann schon im Anstieg bei Erreichen eines vorgebbaren Grenzwertes, der vorteilhafterweise oberhalb des Nennstromes liegt, der Stromfluss zwischen Fahrdraht bzw. Stromschiene und Schienenfahrzeug, bzw. zwischen Netzanschluss und Transformator unterbrochen werden.

Bisher werden Hauptschalter mit Leistungshalbleitern nur als Gleichspannungsschalter in HGÜ Anlagen verwendet, um einen Gleichstrom zu schalten. Da der Gleichstrom keinen Nulldurchgang besitzt, muss der für Gleichstromanwendungen verwendete Schalter die Fähigkeit besitzen, einen Strom auch ohne Nulldurchgang abschalten zu können. Dies ist bei einer Anwendung mit Wechselspannung und Wechselstrom nicht erforderlich. Daher wurde bisher insbesondere bei Bahnfahrzeugen ein konventioneller Hauptschalter eingesetzt, der im Nulldurchgang des Stroms schaltet und kostengünstig verfügbar ist.

Es hat sich jedoch gezeigt, dass durch die Verwendung des Hauptschalters mit Leistungshalbleiterschaltern sich der Strom derart schnell abschalten lässt, dass dieser keine hohen Werte erreicht. Gerade für ein Schienenfahrzeug bietet dies viele Vorteile. Zum einen sinkt damit die Anforderung an die Strombelastbarkeit der Dioden des Eingangsstromrichters. Diese Belastung, angegeben als $i^2t$ Wert, wird zum einen durch eine geringere Stromhöhe, die sogar quadratisch in den Wert der Belastung eingeht, und der deutlich kürzeren Einwirkdauer reduziert. Damit können kostengünstigere Dioden mit einer geringeren Belastbarkeit ($i^2t$-Wert) verwendet werden, die deutlich kostengünstiger verfügbar sind. Die kurze Auslösezeit kann auch dazu vorteilhafterweise genutzt werden, die Streuinduktivität des Transformators zu verringern, da diese zur Verringerung des Kurzschlussstromes nicht mehr so hoch sein muss. Dieser Zusammenhang wird in einem der folgenden Absätze im Zusammenhang mit der Stromanstiegsgeschwindigkeit genauer beschrieben. Eine geringere Streuinduktivität, gleichbedeutend mit einer geringeren Kurzschlussspannung $u_k$ führt zu einer deutlichen Kostenreduzierung bei der Herstellung des Transformators.

Ein weiterer großer Vorteil insbesondere für mobile Anwendungen, wie beispielsweise in einem Schienenfahrzeug, liegt in der Auslegung des Transformators. Im Fehlerfall unterliegt der Transformator einem Stoßstrom, da der Kurzschlussstrom über den Transformator von der Primärseite zur Sekundärseite fließt. Dieser Stoßstrom verursacht hohe mechanische Kräfte im Innern des Transformators. Um eine Beschädigung oder gar Zerstörung des Transformators zu vermeiden, muss dieser eine hohe mechanische Festigkeit besitzen. Diese wird durch einen stabilen mechanischen Aufbau erreicht, der das Gewicht des Transformators je nach Höhe des anzunehmenden Stoßstroms erhöht. Durch die Reduktion der Stoßstromanforderung kann somit das Gewicht des Transformators für Traktionsanwendungen teilweise sogar deutlich reduziert werden. Gerade bei Schienenfahrzeugen ist eine Gewichtsersparnis wichtig, da sich diese Fahrzeuge oftmals bereits an der zulässigen Gewichtsgrenze (beispielsweise zulässige Achslasten) bewegen. Darüber hinaus hilft die Reduktion von Gewicht, den Betrieb verbrauchsärmer und damit sowohl kostengünstiger als auch umweltschonender zu gestalten.

Das Gewicht eines Transformators für HGÜ Anlagen spielt aufgrund des zur Verfügung stehenden Gegebenheiten (Platzbedarf, Tragfähigkeit des Untergrundes) und des ohnehin schon hohen Gewichts, welches oftmals einen Spezialtransport erfordert, keine Rolle.

Es hat sich jedoch gezeigt, dass sich bei Wechselspannungen, wie sie im Bahnnetz vorkommen, insbesondere bei 25kV oder 15kV die Anzahl der in Reihe anzuordnenden Leistungshalbleiter deutlich geringer ist als bei einer Anwendung in einer HGÜ Anlage. Dies vereinfacht die Maßnahmen zur Aufteilung der Spannungen auf die einzelnen in Reihe angeordneten Leistungshalbleiter. Teilweise kann sogar vollständig auf eine solche Maßnahme verzichtet werden. Somit hat sich auf nicht vorhersehbarer Weise herausgestellt, dass sich das Prinzip eines Gleichspannungsschalters auf Basis von Leistungshalbleitern auf Wechselspannungen, wie sie im Bahnnetz vorherrschen, übertragen lassen und zu unerwarteten Vorteilen bei der Auslegung des Transformators (Kurzschlussspannung $u_k$) und Leistungshalbleitern

des Antriebsstromrichters ($i^2$t) führen.

Im Falle eines Kurzschlusses wird der Kurzschlussstrom im Wesentlichen von der Impedanz des Transformators bestimmt, welche sich aus der Streuinduktivität ableitet. Der Kurzschlussstrom wird im Fehlerfall vom Hauptschalter des Systems ausgeschaltet.

Es erfolgt eine Auslösung des Hauptschalters, insbesondere eine automatische Auslösung, durch den Strom, wenn dieser einen zuvor festgelegten Grenzwert überschreitet. Herkömmliche mechanische Hauptschalter können jedoch prinzipbedingt erst im Nulldurchgang des Stromes abschalten. Zusammen mit der mechanischen Auslösegeschwindigkeit erfolgt typisch ein Abschalten je nach Netzfrequenz erst nach ca. 100ms. In der Konsequenz muss die Transformator-Impedanz so hoch gewählt werden, einen schnellen Anstieg des Kurzschlussstromes zu verhindern. Typisch ist eine Kurzschlussspannung des Transformators von mehr als 30%, damit der Kurzschlussstrom ausreichend begrenzt wird. Das führt zu Transformatoren mit hoher Baugröße und schlechterem Wirkungsgrad, als es möglich wäre, ohne diese Auslegungsgrenze.

Durch den Einsatz von Leistungshalbleitern in einem Hauptschalter kann die Auslösezeit deutlich verkürzt werden, da die Leistungshalbleiter einen Strom auch ohne Nulldurchgang schnell abschalten können. Aufgrund der geringeren Auslösezeit kann eine deutlich größere Anstiegsgeschwindigkeit des Kurzschlussstromes toleriert werden. Trotz der hohen Anstiegsgeschwindigkeit können hohe Ströme durch die kurze Auslösezeit verhindert werden. Dadurch ist es möglich die Streuinduktivitäten, die den Stromanstieg verringern, des Transformators zu reduziert. Dies äußert sich in einer geringeren Kurzschlussspannung $u_k$. Es hat sich gezeigt, dass Kurzschlussspannungen $u_k$ von maximal 25% hinreichend sind, um bei einer entsprechend schnellen Abschaltung des Kurzschlussstromes durch den Hauptschalter hinreichend zu beschränken. Gleichzeitig lässt sich darüber hinaus durch die kurze Auslösezeit des Hauptschalters der Kurzschlussstrom derart reduzieren, dass die Dioden des Eingangsstromrichters nicht mehr für so große Kurzschlussströme ausgelegt sein müssen und entsprechend kostengünstiger sind. Bei dem vorgeschlagenem Antriebssystem ist die Höhe des Kurzschlussstromes nicht mehr unbedingt auslegungsbestimmend, so dass die Anforderungen an die Komponenten des Antriebssystems zurückgehen und billiger beschafft werden können.

Neben den geringeren Kurzschlussströmen treten auch geringe Belastungen in den Dioden des Eingangsstromrichters auf. Die Strombelastbarkeit von Dioden wird dabei häufig als $i^2$t Wert angegeben. Um die Dioden des Eingangsstromrichters sicher vor Beschädigung im Kurzschlussfall zu schützen, weisen diese einen $i^2$t Wert auf, bei dem der Kurzschlussstrom einen zulässigen Wert des Stoßstroms des Transformators annimmt. Mit anderen Worten besitzen die Dioden eine Strombelastbarkeit, charakterisiert durch den $i^2$t Wert,

von mindestens einer Höhe, dass sie durch den Stoßstrom welcher vom Transformator bestimmt wird, nicht zerstört werden.

Durch das schnelle Schalten des Hauptschalters kann neben dem Transformator auch der Eingangsstromrichter einfacher dimensioniert werden, da die Belastung durch den Kurzschlussstrom auch für den Eingangsstromrichter abnimmt. Dies liegt darin begründet, dass der Kurzschlussstrom zeitlicher kürzer auf den Eingangsstromrichter einwirkt. Die kurzfristige Strombelastbarkeit, insbesondere der Dioden des Eingangsstromrichters, wird mittels des $i^2$t-Wertes angegeben. Da die Belastung, insbesondere die Zeitdauer sinkt, sinkt auch der $i^2$t-Wert im Kurzschlussfall. Somit kann bei der Herstellung des Eingangsstromrichters auf Komponenten, insbesondere Dioden, zurückgegriffen werden, die einen geringeren $i^2$t-Wert besitzen und somit kostengünstiger beschaffbar sind.

Reduziert man beispielsweise bei einem Schienenfahrzeug mit ca. 6 MW, insbesondere bei einer Lokomotive, die Streuinduktivität des Transformators von 30% auf 10% würde ohne Maßnahmen der Spitzenstrom in der sekundärseitigen Fehlerstelle von 25 kA auf 45kA ansteigen und das $i^2$t von $2,3 \cdot 10^7 A^2s$ auf $8,9 \cdot 10^7 A^2s$ steigen. Durch den Hauptschalter mit Leistungshalbleitern werden die Werte stattdessen auf 19kA (Spitzenstrom) bzw. **$0,15 \cdot 10^7 A^2s$** (Strombelastung) reduziert. Somit ist es besonders vorteilhaft, wenn die Parallelschaltung aus den Dioden des Eingangsstromrichters eine Strombelastbarkeit $i^2$t im Bereich von **$0,15 \cdot 10^7 A^2s$** bis **$2,3 \cdot 10^7 A^2s$** aufweisen, wobei die Kurzschlussspannung $u_k$ des Transformators maximal 10% beträgt.

Besonders vorteilhaft ist die Anwendung des Antriebssystems in einem Schienenfahrzeug, wobei das Schienenfahrzeug für den Betrieb in einem Wechselspannungsnetz vorgesehen ist. Üblicherweise beträgt die Spannung in einem solchen Wechselspannungsnetz 15kV oder 25kV. Bei einem solchen Betrag, bzw. bei einem Betrag in dieser Größenordnung, brauchen nur wenige Leistungshalbleiter zur Erreichung einer hinreichenden Sperrfähigkeit in Reihe geschaltet zu werden, so dass ein entsprechender Hauptschalter mit Leistungshalbleitern kostengünstig herstellbar ist. Die dafür notwendige Symmetrierung, d.h. eine Maßnahme zur gleichmäßigen Aufteilung der Sperrspannung kann in diesem Fall besonders einfach und aufwandsarm erfolgen. Teilweise kann sie auch bei leichter Überdimensionierung entfallen. Bei dieser Überdimensionierung werden mehr Leistungshalbleiter in Reihe geschaltet als rechnerisch bei einer gleichmäßigen Aufteilung der Sperrspannung auf die einzelnen Leistungshalbleiter erforderlich sind. Damit sind die einzelnen Leistungshalbleiter auch bei einer nicht gleichmäßigen Aufteilung der Sperrspannung vor einer Überlastung geschützt.

Ein besonderer Vorteil ergibt sich bei einem Schienenfahrzeug dadurch, dass durch die schnelle Auslösung mittels des Hauptschalters mit Leistungshalbleitern auch bei geringer Streuinduktivität, d.h. bei gerin-

ger Kurzschlussspannung $u_k$, des Transformators der Kurzschlussstrom durch den Transformator, auch als Stoßstrom bezeichnet, reduziert wird. Durch die geringeren Anforderungen aus der Stoßstrombelastung an den Transformator kann dieser mechanisch einfacher aufgebaut werden. Der Stoßstrom verursacht je nach Höhe innere Kräfte im Transformator, die diesen beschädigen oder zerstören können. Durch die Reduzierung des Stoßstroms im Fehlerfall kann der mechanische Aufbau des Transformators deutlich vereinfacht werden. Dies führt unter anderem zu einem geringeren Gewicht des Transformators. Gerade bei einem Schienenfahrzeug kann durch die Gewichtsreduzierung das Fahrzeug kostengünstiger hergestellt und betrieben werden. Durch das große Potenzial an Gewichtseinsprung kann an anderer Stelle auf Gewichtseinsparung verzichtet werden, an denen diese besonders kostentreibend sind.

Unter einem mit Wechselspannung betreibbaren Schienenfahrzeug versteht der Fachmann ein Schienenfahrzeug, welches mit einer an einem Fahrdraht oder an einer Stromschiene anliegenden Wechselspannung betrieben, insbesondere bewegt, werden kann.

Bei einer vorteilhaften Ausgestaltung der Erfindung weist der Transformator eine Kurzschlussspannung im Bereich zwischen 5% und 8% auf. Ein elektrisch und/oder bezüglich der Baugröße optimaler Transformator hat eine Impedanz, d.h. eine Streuinduktivität, die einer Kurzschlussspannung $u_k$ von etwa 5% bis 8% entspricht. Dieser ist zudem leicht, was den Einsatz in einem Fahrzeug, insbesondere einem Schienenfahrzeug, begünstigt. Darüber hinaus ist der Transformator einfach fertigbar, da keine Maßnahmen zur Erhöhung der Streuinduktivität berücksichtigt werden müssen. Somit ist ein Transformator mit einer Kurzschlussspannung im Bereich zwischen 5% und 8% besonders kostengünstig herstellbar.

Bei einer weiteren vorteilhaften Ausgestaltung der Erfindung ist parallel zu der ersten Reihenschaltung von mindestens zwei Leistungshalbleitern ein spannungsbegrenzendes Element, insbesondere ein Varistor, angeordnet. Mit dem Abschalten des Stromes durch den Hauptschalter ist eine schnelle Änderung des Stromes verbunden. Aufgrund von Induktivitäten im System, insbesondere den Streuinduktivitäten des Transformators, kann je nach Höhe dieser Induktivitäten eine Spannung, teilweise sogar eine recht hohe Spannung verursacht werden, welche die Sperrspannung der Leistungshalbleiter überschreitet. Damit diese Spannung die Leistungshalbleiter nicht schädigen kann, wird in einer vorteilhaften Ausgestaltung parallel zu den mindestens zwei Leistungshalbleitern ein spannungsbegrenzendes Element angeordnet. Dazu eignet sich im Besonderen ein Varistor. Dieser kann die induktive Energie beim Schaltvorgang abbauen und den parallelen Leistungshalbleiter vor Zerstörung schützen. Damit kann das Antriebssystem vor Schäden durch zu hohe Spannung bewahrt werden.

Bei einer weiteren vorteilhaften Ausgestaltung der Erfindung weist der Hauptschalter einen Trenner auf, wobei der Trenner in Reihe zu der ersten Reihenschaltung von mindestens zwei Leistungshalbleitern angeordnet ist. Dabei ist der Trenner vorzugsweise derart angeordnet, dass im geöffneten Zustand des Trenners der Transformator galvanisch vom Netzanschluss getrennt ist. Ein Trenner ist ein Schalter, der nicht unter Last, d. h. bei Stromfluss geschaltet werden darf. Er ist günstig herstellbar, da dieser Trenner keine Teile enthält, die einen Strom beim Schalten gezielt reduzieren. Dieser ist daher im Vergleich zu einem Schalter deutlich kostengünstiger und lässt sich mit einem Hauptschalter mit Leistungshalbleitern derart kombinieren, dass mit Öffnen des Trenners der Transformator und die daran sekundärseitig angeschlossenen Komponenten sicher vom Bahnnetz, dem Energieversorgungsnetz des Schienenfahrzeugs, getrennt werden. Mittels mechanischer Verriegelungen lässt sich darüber hinaus ein unbeabsichtigtes Einschalten des Trenners auf einfache und kostengünstige Weise sicher verhindern.

Durch den Trenner kann eine sichere Trennung zwischen Bahnnetz und Antriebssystem hergestellt werden, wie sie unter anderem durch geltende Sicherheitsanforderungen definiert sind.

Bei einer weiteren vorteilhaften Ausgestaltung der Erfindung weist das Antriebssystem eine Schutzvorrichtung auf, mit der ein Netzstrom erfassbar ist, der vom Netzanschluss zum Transformator fließt, wobei die Schutzvorrichtung derart mit dem Hauptschalter verbunden ist, dass bei Überschreitung eines Grenzwertes durch den Netzstrom der Hauptschalter auslösbar ist. Zur Sicherstellung einer schnellen Reaktion auf einen Kurzschluss wird keine Steuerungs- oder Regelungsvorrichtung benötigt. Eine Schutzvorrichtung zum Schutz vor Kurzschlussströmen benötigt lediglich einen Stromsensor zur Erfassung des Netzstroms, der vom Bahnnetz, d.h. vom Fahrdraht, zum Antriebssystem des Fahrzeugs fließt. Der Vergleich mit einem Grenzwert kann dabei beispielsweise mittels Hardware oder Software vorgenommen werden. Ein Treiber sorgt dafür, dass die Leistungshalbleiter mit einem Signal angesteuert werden, welches ein Abschalten der Leistungshalbleiter bewirkt, d.h. die Leistungshalbleiter in einen sperrenden Zustand versetzt.

Bei einer weiteren vorteilhaften Ausgestaltung der Erfindung weist der Hauptschalter eine zweite Reihenschaltung von mindestens zwei weiteren Leistungshalbleitern auf, wobei mittels eines ersten weiteren Leistungshalbleiters der mindestens zwei weiteren Leistungshalbleiter ein Strom durch die zweite Reihenschaltung in Richtung vom Netzanschluss zum Transformator abschaltbar ist und durch einen zweiten weiteren Leistungshalbleiter der mindestens zwei weiteren Leistungshalbleiter ein Strom durch die zweite Reihenschaltung in Richtung vom Transformator zum Netzanschluss abschaltbar ist, wobei in Reihe zu der zweiten Reihenschaltung ein mechanischer Schalter angeordnet ist, wobei die erste Reihenschaltung parallel zu der in Reihe angeordneten zweiten Reihenschaltung und dem mechanischen Schalter angeordnet ist, wobei die Sperrfähigkeit der ersten Reihenschaltung von mindestens zwei Leistungshalbleitern größer ist als die Sperrfähigkeit der zweiten Reihenschaltung von mindestens zwei weiteren Leistungshalbleitern. Diese Art von Hauptschalter wird auch als Hybridschalter bezeichnet. Dieser verfügt über die erste Reihenschaltung von Leistungshalbleitern. Parallel dazu ist in einem Hauptkreis ein mechanischer Schalter in Reihe mit einem weiteren elektronischen Schalter angeordnet. Dieser weitere elektronische Schalter, der über eine zweite Reihenschaltung von Leistungshalbleitern gebildet wird, benötigt nur eine geringere Sperrfähigkeit im Vergleich zur ersten Reihenschaltung. Dies ist deshalb möglich, da die Sperrwirkung, d. h. die Spannung im gesperrten Zustand dauerhaft über dem mechanischen Schalter abfällt und nicht von den dazu in Reihe angeordneten Leistungshalbleitern aufgenommen werden muss. Der Hauptkreis ist im eingeschalteten Zustand für das Führen des Stroms zuständig, so dass dieser hinsichtlich geringer Durchlassverluste ist. Diese Optimierung kann zu Lasten der Sperrfähigkeit gehen, da die Sperrfähigkeit im geöffneten Zustand durch den mechanischen Schalter erreicht wird.

Beim Hybridschalter vollzieht sich die Auslösung, d.h. das Öffnen, zunächst durch Öffnen des Weiteren elektronischen Schalters, der durch die zweite Reihenschaltung von mindestens zwei weiteren Leistungshalbleitern gebildet wird. Dieser wird auch als Hilfsschalters oder Load Commutation Switch bezeichnet. Da parallel dazu die erste Reihenschaltung von mindestens zwei Leistungshalbleitern leitend ist, fällt keine nennenswerte Spannung, über den Hilfsschalter ab. Anschließend wird der mechanische Schalter, auch als Ultra Fast Disconnector bezeichnet, geöffnet. Nachdem der mechanische Schalter ausreichend spannungsfest ist, was bei Einsatz eines schnellen Schalters typischerweise in weniger als 3ms gegeben ist, wird der dazu parallele elektronische Schalter der ersten Reihenschaltung geöffnet. Es hat sich gezeigt, dass die Schaltzeit im Wesentlichen davon abhängt, wie schnell der mechanische Schalter ausreichend spannungsfest ist, d.h. eine Spannung aufnehmen kann, ohne dass die Gefahr besteht dass dieser leitend werden kann. Daher hat es sich als besonders vorteilhaft erwiesen, für den mechanischen Schalter einen besonders schnell schaltenden Schalter zu verwenden.

Durch die geringere Sperrfähigkeit der Leistungshalbleiter im Hauptkreis können hier Leistungshalbleiter mit geringeren Leitendverluste zur Anwendung kommen.

Bei einer weiteren vorteilhaften Ausgestaltung der Erfindung ist die Anzahl der in Reihe angeordneten Leistungshalbleiter der ersten Reihenschaltung größer als die Anzahl der in Reihe angeordneten Leistungshalbleiter der zweiten Reihenschaltung. Auf diese Weise lässt sich insbesondere bei der Verwendung von baugleichen Leistungshalbleitern für die beiden Reihenschaltungen sowohl eine höhere Sperrspannung der ersten Reihenschaltung als auch geringe Leitendverluste, d.h. ein geringer Durchlasswiderstand, der zweiten Reihenschaltung erzielen. Durch die verwendeten gleichen Leistungshalbleiter sind zudem die Beschaffungskosten und Lagerhaltungskosten für Ersatzteile und Wartung vergleichsweise gering.

Bei einer weiteren vorteilhaften Ausgestaltung der Erfindung weist die zweite Reihenschaltung genau zwei weitere Leistungshalbleiter auf. Damit wird die zweite Reihenschaltung aus genau zwei weiteren Leistungshalbleitern gebildet. Diese beiden Leistungshalbleiter des Hauptkreises, sind dabei entgegengesetzt zueinander angeordnet, so dass diese jeweils den Strom in eine Richtung schalten können. Durch den Verzicht auf weitere, in Reihe angeordnete Leistungshalbleiter ist der Bahnwiderstand der Leistungshalbleiter besonders gering. In einer besonders vorteilhaften Anordnung können für beide Leistungshalbleiter der zweiten Reihenschaltung Leistungshalbleiter verwendet werden, die besonders geringe Durchlassverluste haben. Mit diesen ist es möglich, einen besonders verlustarmen Hauptschalter mit Leistungshalbleitern herzustellen. Darüber hinaus ist durch die geringe Anzahl der Leistungshalbleiter dieser Hauptschalter besonders preisgünstig herstellbar.

Im Folgenden wird die Erfindung anhand der in den Figuren dargestellten Ausführungsbeispiele näher beschrieben und erläutert. Es zeigen:

FIG 1        Ein Antriebssystem eines Schienenfahrzeugs,

FIG 2        das Zeitverhalten bei Abschalten eines Kurzschlussstromes durch einen mechanischen Hauptschalter,

FIG 3        das Zeitverhalten bei Abschalten eines Kurzschlussstromes durch einen Hauptschalter mit Leistungshalbleitern,

FIG 4 bis 6   jeweils ein Ausführungsbeispiel eines Hauptschalters mit Leistungshalbleitern und

FIG 7        ein Ausführungsbeispiel eines Hybridschalters.

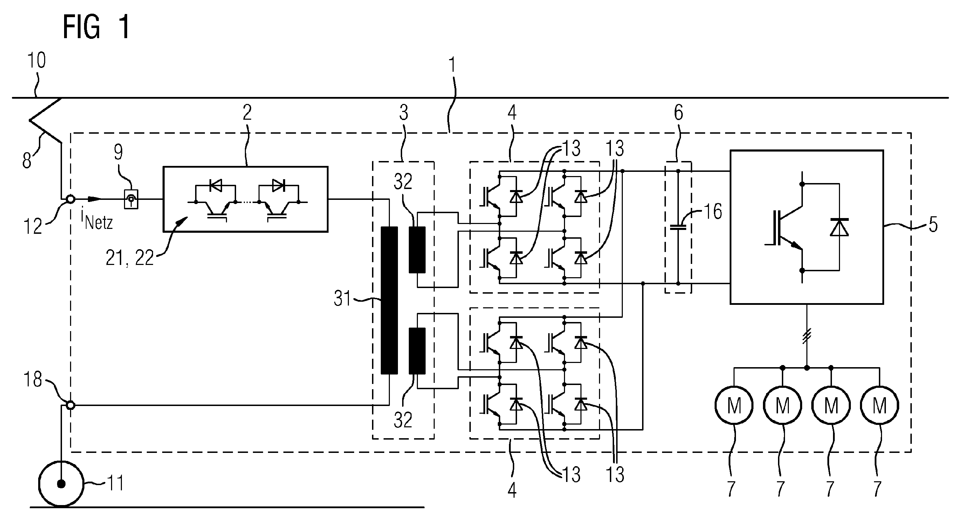

FIG 1 zeigt ein Antriebssystem 1 eines Schienenfahrzeugs. Dieses weist einen Netzanschluss 12 zur Verbindung mit einem Fahrdraht 10 auf. Alternativ zum Fahrdraht 10 kann das Fahrzeug auch mittels einer Stromschiene mit elektrischer Energie versorgt werden. Den Kontakt zum Fahrdraht 10 oder zu der Stromschiene stellt ein Stromabnehmer 8 her. Der Netzanschluss 12 ist mit der Primärwicklung 31 eines Transformators 3 verbunden. Zwischen Transformator 3 und Netzanschluss 12 ist ein Hauptschalter 2 angeordnet, der es erlaubt, einen Stromfluss, insbesondere während eines Kurzschlusses im Schienenfahrzeug, zu unterbrechen. Um einen unerwünschten oder unzulässig hohen Stromfluss zu erkennen hat es sich als vorteilhaft erwiesen, in diesem Stromkreis einen Stromwandler 9 vorzusehen. Um den Stromkreis durch die Primärwicklung des Transformators zu schließen, ist die Primärwicklung noch über einen Masseanschluss 18 mit dem Rad und der Schiene verbunden.

Die Sekundärwicklung 32 ist mit einem Eingangsstromrichter 4 verbunden. Dieser wird häufig auch als Vierquadrantensteller oder kurz 4QS bezeichnet. Dieser weist schaltbare Halbleiter und Dioden 13 auf, mit denen im Zwischenkreis 6 eine Gleichspannung erzeugt werden kann, die an einem Zwischenkreiskondensator 16 anliegt. Aus dieser Zwischenkreisspannung werden mittels eines Pulswechselrichters 4 Spannungen und Ströme erzeugt, die in den Fahrmotoren 7 ein gewünschtes Drehmoment bewirken. Das Schienenfahrzeug kann dabei einen oder mehrere Zwischenkreise 6 sowie einen oder mehrere Pulswechselrichter 5 aufweisen. Auch die Anzahl der Fahrmotoren 7 pro Pulswechselrichter 5 kann abhängig von der Leistungsfähigkeit des Schienenfahrzeugs gewählt werden. Dabei speist ein Pulswechselrichter 5 mindestens einen Fahrmotor 7. Ein Zwischenkreis 6 kann dabei jeweils von einem oder mehreren Eingangsstromrichtern 4 mit elektrischer Energie versorgt werden.

Um einen Strom, insbesondere einen Kurzschlussstrom, schnell und unabhängig von Nulldurchgängen der Wechselspannung des Energieversorgungsnetzes schalten zu kennen, wird als Hauptschalter 2 ein Hauptschalter 2 mit Leistungshalbleitern 21,22 verwendet.

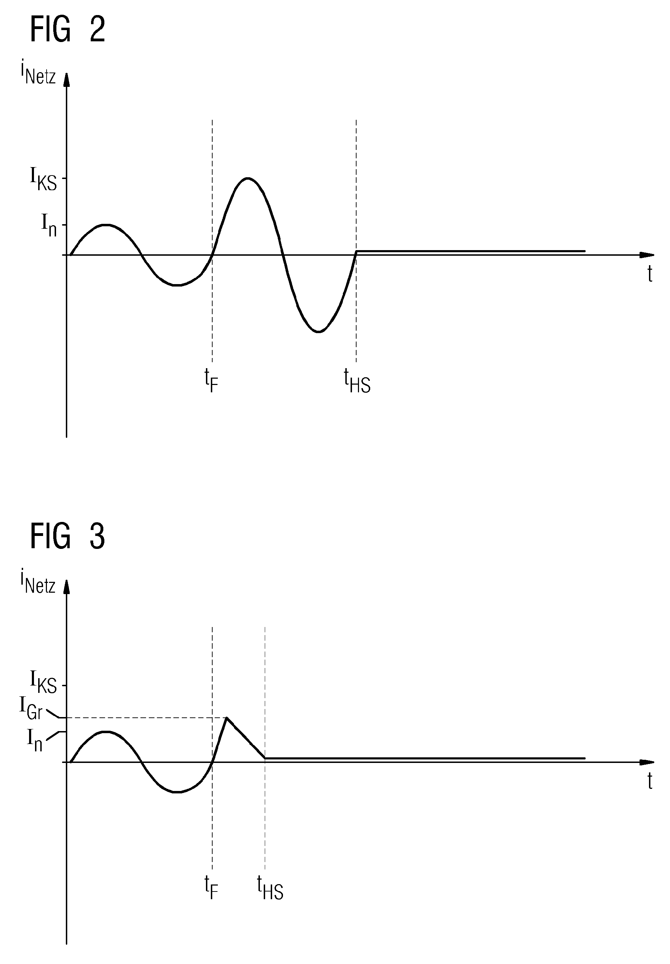

Den Abschaltvorgang eines Kurzschluss mit Hilfe eines mechanischen Schalters zeigt FIG 2. Im Nennbetrieb nimmt der Netzstrom $i_{Netz}$ einen maximalen Betrag (Amplitude) von $I_n$ an. Tritt nun zum Zeitpunkt $t_F$ ein Fehler in Form eines Kurzschlusses auf der Sekundärseite des Transformators 3 auf, so erhöht sich abhängig von der Kurzschlussspannung $u_k$ des Transformators 3 der Netzstrom $i_{Netz}$ und nimmt dabei einen Wert $I_{KS}$ an, der teilweise um ein Vielfaches höher ist als der Wert $I_n$ im Nennbetrieb. Der mechanische Hauptschalter 2 kann diesen Strom erst nach einem oder zwei Nulldurchgängen abschalten. Dieser Zeitpunkt ist in FIG 2 mit $t_{HS}$ bezeichnet. Dabei entsteht während des Zeitintervalls zwischen $t_F$ und $t_{HS}$ insbesondere in den Dioden 13 des Eingangsstromrichters 4 eine Belastung duch den Kurzschluss, die mit Hilfe des $i^2t$ Wertes beschreibbar ist. Diese ergibt sich zu

$$i^2t = \int_{t_F}^{t_{HS}} i_{Diode}^2 \, dt$$

Die Höhe des Diodenstroms $i_{Diode}$ ist dabei aufgrund des Trafoübersetzungsverhältnisses proportional zum Netzstrom $i_{Netz}$. Dabei teilt sich der sekundärseitige Transformatorstrom in Abhängigkeit von seiner Phasenlage auf die unterschiedlichen Dioden 13 des Eingangsstromrichters 4 auf. Bei einem mechanischen Hauptschalter wird die Belastung durch eine Verringerung der Stromanstiegsgeschwindigkeit im Kurzschlussfall beschränkt, da die Zeitdauer der Abschaltung nicht beeinflussbar ist und von den Nulldurchgängen abhängt. Die Verringerung der Stromanstiegsgeschwindigkeit wird über Streuinduktivitäten im Transformator 3 erreicht, die sich in einer entsprechend hohen Kurzschlussspannung $u_k$ ausdrückt.

Die FIG 3 zeigt den Verlauf des Netzstroms bei der Verwendung eines Hauptschalters 2 mit Leistungshalbleitern. Dieser Hauptschalter 2 ist in der Lage, den Netzstrom $i_{Netz}$, insbesondere den Wechselstrom, unabhängig von Nulldurchgängen zu schalten. Sobald der Netzstrom $i_{Netz}$ einen vorgebbaren Grenzwert $I_{Gr}$ überschreitet, wird der Strom abgeschaltet. Induktive Energie, die beispielseise in den Streuinduktivitäten gespeichert ist, wird abgebaut und der Strom zu null gebracht. In vorteilhafter Weise wird der Grenzwert $I_{Gr}$ größer als der Nennstrom $I_n$, insbesondere 20% größer als der Nennstrom $I_n$, gewählt. Sobald der Grenzwert überschritten wird, wird der Stromfluss mittels des Hauptschalters 2 unterbrochen. Aufgrund der kurzen Ausschaltzeit kann eine deutlich größere Stromanstiegsgeschwindigkeit und somit auch eine geringere Kurzschlussspannung $u_k$ des Transformators toleriert werden. Damit kann der Transformator kostengünstiger hergestellt werden, da auf ein Einbringen bzw. Konstruktion von zusätzlicher Streuinduktivität verzichtet werden kann. Wegen der geringeren Auslösezeit zwischen Auftreten des Fehlers $t_F$ und Abschalten des Fehlerstroms $t_{HS}$ sinkt auch die Belastung der Dioden 13 des Eingangsstromrichters 4 entsprechend der genannten Formel für den $i^2t$-Wert.

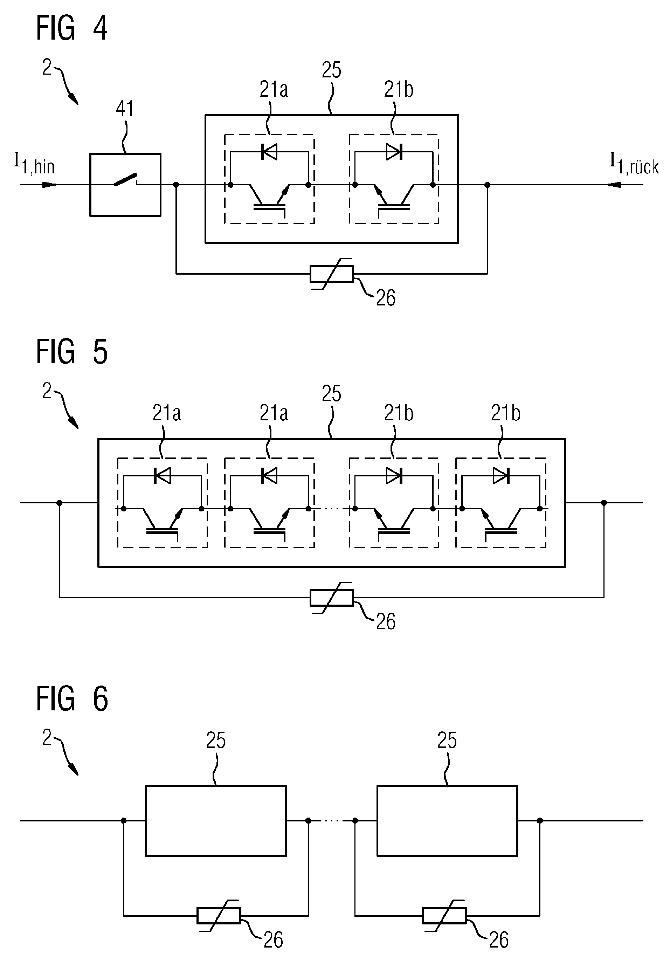

Ein Ausführungsbeispiel für einen entsprechenden Hauptschalter 2 mit Leistungshalbleitern 21, 22, 21a, 21b, 22a, 22b zeigt FIG 4. Um einen Strom in beiden Richtungen, d.h. einen Hinstrom $I_{1,hin}$ und einen Rückstrom $I_{1,rück}$ abschalten zu können, müssen mindestens zwei Leistungshalbleiter 21, 22, 21a, 21b, 22a, 22b in einer Reihenschaltung 25 angeordnet sein. Dabei ist ein erster Leistungshalbleiter 21a zum Abschalten des Hinstroms $I_{1,hin}$ angeordnet und ein zweiter Leistungshalbleiter 21b bezüglich seiner Sperrwirkung entgegengesetzt zum erster Leistungshalbleiter 21a angeordnet. Zum Abbau von induktiver Energie, beispielsweise durch die Streuinduktivitäten des Transformators 3 oder der Leitungen kann ein spannungsbegrenzendes Element 26, insbesondere ein Varistor, parallel zu der Reihenschaltung 25 angeordnet werden.

Als besonders vorteilhaft hat es sich erwiesen, wenn in Reihe zu der Reihenschaltung ein Trenner 41 vorgesehen wird, dieser erlaubt das Schienenfahrzeug sicher vom Fahrdraht oder Stromschiene zu isolieren und spannungsfrei zu schalten. Dabei kann der Trenner 41 sowohl zwischen Hauptschalter 2 und Netzanschluss 12 als auch zwischen Hauptschalter 2 und Transformator 3 angeordnet werden. Bei der Anordnung zwischen Hauptschalter 2 und Netzanschluss 12 ergibt sich darüber hinaus der Vorteil, dass im abgeschalteten Zustand des Trenners 41 auch der Hauptschalter 2 potentialmäßig vom Fahrdraht sicher getrennt ist und dieser somit bei geöffnetem Trenner für Wartungsarbeiten zugänglich ist.

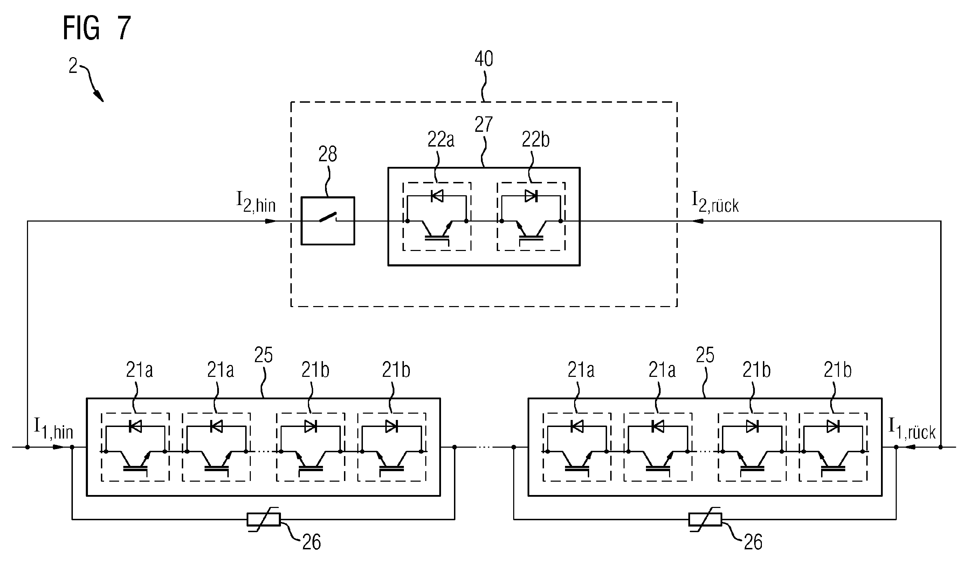

Die Ausrichtung der ersten und zweiten Leistungshalbleiter 21a, 21b der ersten Reihenschaltung 25 zum Abschalten von Hinstrom $I_{1,hin}$ und Rückstrom $I_{1,rück}$ kann auf die Ausrichtung der weiteren Leistungshalbleiter 22, 22a, 22b der zweiten Reihenschaltung 27, beispielsweise gemäß FIG 7, zum Schalten von Hinstrom $I_{2,hin}$ und Rückstrom $I_{2,rück}$ übertragen werden.

Um die Sperrwirkung zu erhöhen oder um einzelne Leistungshalbleiter 21, 22, 21a, 21b, 22a, 22b mit geringerer Sperrspannung einsetzen zu können, hat es sich als vorteilhaft erwiesen mehrere erste Leistungshalbleiter 21a, 22a und mehrere zweite Leistungshalbleiter 21b, 22b in einer Reihenschaltung anzuordnen, da damit eine für das Bahnnetz hinreichenden Sperrspannung realisiert werden kann. Ein Ausführungsbeispiel dafür zeigt FIG 6. Insbesondere bei einer Anordnung von gleichartigen ersten Leistungshalbleitern 21a, 22a und zweiten Leistungshalbleitern 21b, 22b ergeben sich dann bei der Reihenschaltung kaum Unterschiede in der Aufteilung der Sperrspannung auf die einzelnen Leistungshalbleiter. Eine entsprechende Fehlaufteilung kann durch zusätzliche in Reihe angeordneter Leistungshalbleiter 21, 22 berücksichtigt werden. Um eine zu große anliegende Sperrspannung zu vermeiden, können auch Teile der Reihenschaltung 25 mit entsprechenden weiteren spannungsbegrenzenden Elementen 26 gesichert werden. Insbesondere bei einer Reihenschaltung mit einer Vielzahl von ersten und zweiten Leistungshalbleitern 21, 22 kann parallel zu jeder Teilreihenschaltung, die genau einen ersten Leistungshalbleiter 21a und genau einen zweiten Leistungshalbleiter 22a aufweist, ein spannungsbegrenzendes Element 26 angeordnet werden.

Zur Vermeidung von Wiederholungen wurde in den Figuren 5 und 6 auf die Darstellung eines Trenners 41 verzichtet. Die Sichere Trennung kann allerdings auch hier, genauso wie in der FIG 7 mit einem solchen Trenner 41, wie bereits beschrieben, vorgenommen werden.

FIG 7 zeigt einen Hybridschalter als Hauptschalter 2. Der unten dargestellte Zweig kann dabei alternativ nach einem der Figuren 4 bis 6 oder einer Kombination dieser Ausführungen ausgebildet sein. Erweitert wurde dieser Hauptschalter um einen oben dargestellten Hauptzweig. Dieser weist eine zweite Reihenschaltung 27 von mindestens zwei weiteren Leistungshalbleitern 22, 22a, 22b auf. Im Nennbetrieb führt der Hauptzweig den Netzstrom $i_{Netz}$. Zum Abschalten des Stroms werden die weiteren Leistungshalbleiter 22, 22a, 22b gesperrt und der Strom fließt über den unteren Zweig. Da der untere Zweig leitend ist, fällt keine nennenswerte Sperrspannung über der zweiten Reihenschaltung 27 ab. Gleichzeitig mit dem Sperren der weiteren Leistungshalbleiter oder kurz danach wird der mechanische Schalter 28 geöffnet. Sobald dieser eine hinreichende Spannungsfestigkeit erreicht hat, d.h. eine Sperrspannung aufnehmen kann, die der Netzspannung des Bahnnetzes entspricht, werden die Leistungshalbleiter 21 der ersten Reihenschaltung 25 gesperrt. Als besonders vorteilhaft hat es sich erwiesen, nach dem Öffnen des mechanischen Schalters 28 maximal 3ms zu warten bis die Leistungshalbleiter 21 der ersten Reihenschaltung 25 gesperrt werden.

Der Hybridschalter hat den Vorteil, dass er im Betrieb deutlich verlustärmer ist, da die elektrischen Verluste in der zweiten Reihenschaltung 27 deutlich kleiner gestaltbar sind als die Verluste der ersten Reihenschaltung, weil diese keine so große Sperrspannung realisieren muss.

Zusammenfassend betrifft die Erfindung ein Antriebssystem für ein Schienenfahrzeug mit einem Transformator, einem Hauptschalter und einem Netzanschluss, wobei der Hauptschalter zwischen dem Netzanschluss und einer Primärwicklung des Transformators angeordnet ist. Zur Verbesserung des Antriebssystems wird vorgeschlagen dass der Transformator eine Kurzschlussspannung $u_k$ von maximal 25% aufweist, wobei der Hauptschalter eine erste Reihenschaltung von mindestens zwei Leistungshalbleitern aufweist, wobei mittels eines ersten Leistungshalbleiters der mindestens zwei Leistungshalbleiter ein Strom durch die erste Reihenschaltung in Richtung vom Netzanschluss zum Transformator abschaltbar ist und mittels eines zweiten Leistungshalbleiters der mindestens zwei Leistungshalbleiter ein Strom durch die erste Reihenschaltung in Richtung vom Transformator zum Netzanschluss abschaltbar ist. Weiter betrifft die Erfindung ein Schienenfahrzeug mit einem solchen Antriebssystem, wobei der Netzanschluss des Antriebssystems mit einem Stromabnehmer elektrisch verbunden ist, wobei das Schienenfahrzeug für den Betrieb in einem Wechselspannungsnetz vorgesehen ist.

**Patentansprüche**

1. Antriebssystem (1) für ein Schienenfahrzeug aufweisend

    - einen Transformator (3),
    - einen Hauptschalter (2) und
    - einen Netzanschluss (12),

wobei der Hauptschalter (2) zwischen dem Netzanschluss (12) und einer Primärwicklung (31) des Transformators (3) angeordnet ist, **dadurch gekennzeichnet, dass** der Transformator (3) eine Kurzschlussspannung ($u_k$) von maximal 25% aufweist, wobei der Hauptschalter (2) eine erste Reihenschaltung (25) von mindestens zwei Leistungshalbleitern (21,21a,21b) aufweist, wobei mittels eines ersten Leistungshalbleiters (21a) der mindestens zwei Leistungshalbleiter (21) ein Strom ($I_{1,hin}$) durch die erste Reihenschaltung (25) in Richtung vom Netzanschluss (12) zum Transformator (3) abschaltbar ist und mittels eines zweiten Leistungshalbleiters (21b) der mindestens zwei Leistungshalbleiter (21) ein Strom ($I_{1,rück}$) durch die erste Reihenschaltung (25) in Richtung vom Transformator (3) zum Netzanschluss (12) abschaltbar ist.

2. Antriebssystem (1) nach Anspruch 1, wobei der Transformator (3) eine Kurzschlussspannung ($u_k$) im Bereich zwischen 5% und 8% aufweist.

3. Antriebssystem (1) nach einem der Ansprüche 1 oder 2, wobei parallel zu der ersten Reihenschaltung (25) von mindestens zwei Leistungshalbleitern (21,21a,21b) ein spannungsbegrenzendes Element (26), insbesondere ein Varistor, angeordnet ist.

4. Antriebssystem (1) nach einem der Ansprüche 1 bis 3, wobei der Hauptschalter (2) einen Trenner (41) aufweist, wobei der Trenner (41) in Reihe zu der ersten Reihenschaltung (25) von mindestens zwei Leistungshalbleitern (21,21a,21b) angeordnet ist.

5. Antriebssystem (1) nach einem der Ansprüche 1 bis 4, wobei das Antriebssystem (1) eine Schutzvorrichtung aufweist, mit der ein Netzstrom ($i_{Netz}$) erfassbar ist, der vom Netzanschluss (12) zum Transformator (3) fließt, wobei die Schutzvorrichtung derart mit dem Hauptschalter (2) verbunden ist, dass bei Überschreitung eines Grenzwertes ($I_{Gr}$) durch den Netzstrom ($i_{Netz}$) der Hauptschalter (2) auslösbar ist.

6. Antriebssystem (1) nach einem der Ansprüche 1 bis 5, wobei der Hauptschalter (2) eine zweite Reihenschaltung (27) von mindestens zwei weiteren Leistungshalbleitern (22,22a,22b) aufweist, wobei mittels eines ersten weiteren Leistungshalbleiters (22a) der mindestens zwei weiteren Leistungshalbleiter (22) ein Strom ($I_{2,hin}$) durch die zweite Reihenschaltung (27) in Richtung vom Netzanschluss (12) zum Transformator (3) abschaltbar ist und durch einen zweiten weiteren Leistungshalbleiter (22b) der mindestens zwei weiteren Leistungshalbleiter (22) ein Strom ($I_{2,rück}$) durch die zweite Reihenschaltung (27) in Richtung vom Transformator (3) zum Netzanschluss (12) abschaltbar ist, wobei in Reihe zu der zweiten Reihenschaltung (27) ein mechanischer Schalter (28) angeordnet ist, wobei die erste Reihenschaltung (25) parallel zu der in Reihe angeordneten zweiten Reihenschaltung (27) und dem mechanischen Schalter (28) angeordnet ist, wobei die Sperrfähigkeit der ersten Reihenschaltung (25) von mindestens zwei Leistungshalbleitern (21) größer ist als die Sperrfähigkeit der zweiten Reihenschaltung (27) von mindestens zwei weiteren Leistungshalbleitern (22).

7. Antriebssystem (1) nach Anspruch 6, wobei die Anzahl der in Reihe angeordneten Leistungshalbleiter (21) der ersten Reihenschaltung (25) größer ist als die Anzahl der in Reihe angeordneten Leistungshalbleiter (22) der zweiten Reihenschaltung (27).

8. Antriebssystem (1) nach einem der Ansprüche 6 oder 7, wobei die zweite Reihenschaltung (27) genau zwei weitere Leistungshalbleiter (22a,22b) aufweist.

9. Schienenfahrzeug mit einem Antriebssystem nach einem der Ansprüche 1 bis 8, wobei der Netzanschluss (12) des Antriebssystems (1) mit einem Stromabnehmer (8) elektrisch verbunden ist, wobei das Schienenfahrzeug für den Betrieb in einem Wechselspannungsnetz vorgesehen ist.

10. Verfahren zum Betreiben eines Antriebssystems (1) nach einem der Ansprüche 1 bis 9 oder eines Schienenfahrzeugs nach Anspruch 10, wobei der Netzanschluss (12) des Antriebssystems (1) mit einem Fahrdraht (10) oder einer Stromschiene elektrisch verbunden ist, wobei bei Erkennen eines Kurzschlusses auf der Sekundärseite des Transformators (3) die mindestens zwei Leistungshalbleiter (21,21a,21b) der ersten Reihenschaltung (25) gesperrt werden.

11. Verfahren nach Anspruch 10 für ein Antriebssystem (1) gemäß einem der Ansprüche 7 bis 9, wobei vor dem Sperren der mindestens zwei Leistungshalbleiter (21,21a,21b) der ersten Reihenschaltung (25) die mindestens zwei weiteren Leistungshalbleiter (22,22a,22b) der zweiten Reihenschaltung (27) gesperrt werden und der mechanische Schalter (28) geöffnet wird, wobei eine Zeitspanne zwischen dem Öffnen des mechanischen Schalters (28) und dem Sperren der mindestens zwei Leistungshalbleiter (21,21a,21b) der ersten Reihenschaltung (25) derart groß gewählt wird, dass der Schalter eine Spannungsfestigkeit erreicht, die den Wert der Spannung des Fahrdrahtes (10) übersteigt.

12. Verfahren nach Anspruch 11, wobei die Zeitspanne weniger als 3ms beträgt.

13. Verwendung eines Hauptschalters (2) zum Abschalten eines Kurzschlussstromes in einem mit Wechselspannung betreibbaren Schienenfahrzeug, wobei das Schienenfahrzeug einen Stromabnehmer (8) und einen Transformator (3) umfasst, wobei der Hauptschalter (2) eine erste Reihenschaltung (25) von mindestens zwei Leistungshalbleitern (21,21a,21b) aufweist, wobei mittels eines ersten (21a) der mindestens zwei Leistungshalbleiter (21) ein Strom ($I_{1,hin}$) durch die erste Reihenschaltung (25) in Richtung vom Stromabnehmer (8) zum Transformator (3) abschaltbar ist und durch einen zweiten (22a) der mindestens zwei Leistungshalbleiter (22) ein Strom ($I_{1,rück}$) durch die erste Reihenschaltung (25) in Richtung vom Transformator (3) zum Stromabnehmer (8) abschaltbar ist.

14. Verwendung eines Hauptschalters (2) nach Anspruch 13, wobei der Hauptschalter (2) eine zweite Reihenschaltung (27) von mindestens zwei weiteren Leistungshalbleitern (22,22a, 22b) aufweist, wobei mittels eines ersten weiteren Leistungshalbleiters (22a) der mindestens zwei weiteren Leistungshalbleiter (22) ein Strom ($I_{2,hin}$) durch die zweite Reihenschaltung (27) in Richtung vom Stromabnehmer (8) zum Transformator (3) abschaltbar ist und durch einen zweiten weiteren Leistungshalbleiter (22b) der mindestens zwei weiteren Leistungshalbleiter (22) ein Strom ($I_{2,rück}$) durch die zweite Reihenschaltung (27) in Richtung vom Transformator (3) zum Stromabnehmer (8) abschaltbar ist, wobei in Reihe zu der zweiten Reihenschaltung (27) ein mechanischer Schalter (28) angeordnet ist, wobei die erste Reihenschaltung (25) parallel zu der in Reihe angeordneten zweiten Reihenschaltung (25) und dem mechanischen Schalter (28) angeordnet ist, wobei die Sperrfähigkeit der ersten Reihenschaltung (25) größer ist als die Sperrfähigkeit der zweiten Reihenschaltung (27).

FIG 1

EP 3 279 024 A1

FIG 2

FIG 3

## FIG 4

## FIG 5

## FIG 6

FIG 7

Europäisches
Patentamt

European
Patent Office

Office européen
des brevets

**EUROPÄISCHER RECHERCHENBERICHT**

Nummer der Anmeldung

EP 16 18 2212

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 199 31 199 A1 (DAIMLER CHRYSLER AG [DE]) 18. Januar 2001 (2001-01-18) * Abbildung 1 * ----- | 1-14 | INV. B60L3/00 B60L3/04 B60L9/00 |
| Y | WO 2015/058813 A1 (SIEMENS AG [DE]) 30. April 2015 (2015-04-30) * Anspruch 1; Abbildungen 4,5 * * Seiten 1,14-16; Abbildung 4 * ----- | 1-14 | H02H3/08 H02H3/05 H02H7/125 H02H7/12 |
| X | DE 198 39 617 A1 (SIEMENS AG [DE]) 9. März 2000 (2000-03-09) * Seite 2; Anspruch 4s; Abbildung 1 * ----- | 1,10,13 | |
| Y | DE 10 2011 006118 A1 (SIEMENS AG [DE]) 27. September 2012 (2012-09-27) * Absatz [0018] * ----- | 2 | |
| Y | DE 10 2010 052136 A1 (SIEMENS AG [DE]) 24. Mai 2012 (2012-05-24) * Absätze [0053] - [0055]; Abbildung 18 * ----- | 3 | |
| Y | EP 2 075 907 A1 (MITSUBISHI ELECTRIC CORP [JP]) 1. Juli 2009 (2009-07-01) * Absätze [0051], [0088], [0096]; Ansprüche 34,35 * ----- -/-- | 1 | RECHERCHIERTE SACHGEBIETE (IPC) B60L H02H |

Der vorliegende Recherchenbericht wurde für alle Patentansprüche erstellt

| Recherchenort | Abschlußdatum der Recherche | Prüfer |
|---|---|---|
| Den Haag | 24. Oktober 2016 | Schury, Dominik |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
Dokument

EPO FORM 1503 03.82 (P04C03)

Seite 1 von 2

Europäisches Patentamt

European Patent Office

Office européen des brevets

# EUROPÄISCHER RECHERCHENBERICHT

**Nummer der Anmeldung**

EP 16 18 2212

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | SANO KENICHIRO ET AL: "A Surgeless Solid-State DC Circuit Breaker for Voltage-Source-Converter-Based HVDC Systems", IEEE TRANSACTIONS ON INDUSTRY APPLICATIONS, IEEE SERVICE CENTER, PISCATAWAY, NJ, US, Bd. 50, Nr. 4, 2. Juli 2014 (2014-07-02), Seiten 2690-2699, XP011553336, ISSN: 0093-9994, DOI: 10.1109/TIA.2013.2293819 [gefunden am 2014-07-15] * Abbildung 6 * | 1,10,13 | |
| A | US 2016/142004 A1 (OTANI HIROAKI [JP] ET AL) 19. Mai 2016 (2016-05-19) * Abbildung 6 * | 1-14 | |
| Y | DE 196 53 727 A1 (SIEMENS AG [DE]) 18. Juni 1998 (1998-06-18) * Anspruch 1; Abbildung 1 * | 1,10 | |
| A | EP 2 843 836 A1 (AIRBUS OPERATIONS GMBH [DE]) 4. März 2015 (2015-03-04) * Absatz [0027]; Abbildung 3 * | 1-14 | **RECHERCHIERTE SACHGEBIETE (IPC)** |
| A | GB 2 517 742 A (EATON IND NETHERLANDS BV [NL]) 4. März 2015 (2015-03-04) * Anspruch 1 * | 1-14 | |
| A | GB 2 221 794 A (ASS ELECT IND [GB]) 14. Februar 1990 (1990-02-14) * Anspruch 1; Abbildung 1 * | 1-14 | |
| Y | US 2001/012207 A1 (NOMURA YOSHIHITO [JP]) 9. August 2001 (2001-08-09) * Absätze [0024], [0036]; Abbildung 1 * | 1,10,13 | |

Der vorliegende Recherchenbericht wurde für alle Patentansprüche erstellt

| Recherchenort | Abschlußdatum der Recherche | Prüfer |
|---|---|---|
| Den Haag | 24. Oktober 2016 | Schury, Dominik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT**
**ÜBER DIE EUROPÄISCHE PATENTANMELDUNG NR.**     EP 16 18 2212

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2016

| Im Recherchenbericht angeführtes Patentdokument | Datum der Veröffentlichung | Mitglied(er) der Patentfamilie | Datum der Veröffentlichung |
|---|---|---|---|
| DE 19931199 A1 | 18-01-2001 | AT 406282 T | 15-09-2008 |
| | | CA 2343247 A1 | 18-01-2001 |
| | | CZ 20011061 A3 | 16-01-2002 |
| | | DE 19931199 A1 | 18-01-2001 |
| | | EP 1112196 A1 | 04-07-2001 |
| | | ES 2312353 T3 | 01-03-2009 |
| | | JP 2003505002 A | 04-02-2003 |
| | | PL 346468 A1 | 11-02-2002 |
| | | RU 2183570 C1 | 20-06-2002 |
| | | US 6538412 B1 | 25-03-2003 |
| | | WO 0103965 A1 | 18-01-2001 |
| WO 2015058813 A1 | 30-04-2015 | CN 105706204 A | 22-06-2016 |
| | | EP 3044799 A1 | 20-07-2016 |
| | | KR 20160074673 A | 28-06-2016 |
| | | US 2016268082 A1 | 15-09-2016 |
| | | WO 2015058813 A1 | 30-04-2015 |
| DE 19839617 A1 | 09-03-2000 | CN 1317167 A | 10-10-2001 |
| | | CN 1848578 A | 18-10-2006 |
| | | DE 19839617 A1 | 09-03-2000 |
| | | EP 1110286 A1 | 27-06-2001 |
| | | EP 1213813 A2 | 12-06-2002 |
| | | US 6665591 B1 | 16-12-2003 |
| | | WO 0013280 A1 | 09-03-2000 |
| DE 102011006118 A1 | 27-09-2012 | KEINE | |
| DE 102010052136 A1 | 24-05-2012 | CN 103299544 A | 11-09-2013 |
| | | DE 102010052136 A1 | 24-05-2012 |
| | | EP 2643930 A2 | 02-10-2013 |
| | | KR 20130132489 A | 04-12-2013 |
| | | RU 2013128531 A | 27-12-2014 |
| | | US 2013256109 A1 | 03-10-2013 |
| | | WO 2012069468 A2 | 31-05-2012 |
| EP 2075907 A1 | 01-07-2009 | CA 2666250 A1 | 24-04-2008 |
| | | CN 101529715 A | 09-09-2009 |
| | | EP 2075907 A1 | 01-07-2009 |
| | | HK 1134592 A1 | 19-04-2013 |
| | | JP 4120708 B2 | 16-07-2008 |
| | | KR 20090052897 A | 26-05-2009 |
| | | US 2010079093 A1 | 01-04-2010 |
| | | WO 2008047439 A1 | 24-04-2008 |
| US 2016142004 A1 | 19-05-2016 | CN 105493395 A | 13-04-2016 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**          EP 16 18 2212

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2016

| Im Recherchenbericht angeführtes Patentdokument | Datum der Veröffentlichung | Mitglied(er) der Patentfamilie | Datum der Veröffentlichung |
|---|---|---|---|
| | | US 2016142004 A1 | 19-05-2016 |
| | | WO 2015020009 A1 | 12-02-2015 |
| DE 19653727 A1 | 18-06-1998 | KEINE | |
| EP 2843836 A1 | 04-03-2015 | KEINE | |
| GB 2517742 A | 04-03-2015 | KEINE | |
| GB 2221794 A | 14-02-1990 | KEINE | |
| US 2001012207 A1 | 09-08-2001 | JP 3361047 B2 | 07-01-2003 |
| | | JP H11215841 A | 06-08-1999 |
| | | KR 19990068197 A | 25-08-1999 |
| | | US 2001012207 A1 | 09-08-2001 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KENICHIRO SANO ; MASAHIRO TAKASAKI.** A Surgeless Solid-State DC Circuit Breaker for Voltage-Source-Converter-Based HVDC Systems. *IEEE Transactions on Industriy Applications,* Juli 2014, vol. 50 (4

- **ARMAN HASSANPOOR ; JÜRGEN HÄFNER ; BJORN JACOBSON.** Technical Assessment of Load Commutation Switch in Hybrid HVDC Breaker. *The 2014 International Power Electronics Conference,* 2014